(19) Europäisches Patentamt
European Patent Office
Office européen des brevets

(11) **EP 2 061 015 B1**

(12) **EUROPÄISCHE PATENTSCHRIFT**

(45) Veröffentlichungstag und Bekanntmachung des Hinweises auf die Patenterteilung:
**24.12.2014 Patentblatt 2014/52**

(51) Int Cl.:
*H04Q 9/00* (2006.01)    *G01B 21/04* (2006.01)

(21) Anmeldenummer: **08013041.2**

(22) Anmeldetag: **19.07.2008**

(54) **Tastsystem und Verfahren zum Betrieb eines Tastsystems**

Sensor system and method for operating same

Système de palpage et procédé destiné au fonctionnement d'un système de palpage

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.11.2007 DE 102007054838**

(43) Veröffentlichungstag der Anmeldung:
**20.05.2009 Patentblatt 2009/21**

(73) Patentinhaber: **Dr. Johannes Heidenhain GmbH 83301 Traunreut (DE)**

(72) Erfinder:
• **Eisenberger, Christian 83324 Ruhpolding (DE)**
• **Gröll, Klaus 83329 Waging (DE)**

(56) Entgegenhaltungen:
**DE-A1- 10 303 551    DE-A1-102006 054 978**

**Beschreibung**

Die Erfindung betrifft ein Tastsystem, bestehend aus einem Tastkopf mit einem Taststift und einem Sende-Empfängerelement, wobei zwischen Tastkopf und dem Sende-Empfängerelement eine drahtlose Datenübertragung möglich ist, gemäß dem Oberbegriff des Anspruchs 1. Ferner betrifft die Erfindung ein Verfahren zum Betrieb eines derartigen Tastsystems gemäß dem Anspruch 9.

Ein Tastsystem umfasst in der Regel einen mobilen Tastkopf und ein stationäres Sende-Empfängerelement. Der Tastkopf in Form eines Tastschalters mit einem auslenkbaren Taststift, der bei einer Auslenkung aus seiner Ruheposition oder bei einer Berührung des Taststifts ein Schaltsignal abgibt, wird insbesondere zur Positionsbestimmung von Werkstücken verwendet, die in Material bearbeitenden Maschinen, beispielsweise Werkzeugmaschinen, eingespannt sind. Unter der Ruheposition des Taststifts wird dabei eine Position verstanden, in welcher der Taststift keinen Kontakt mit dem anzutastenden Werkstück hat. Bei einem Kontakt des Taststifts mit dem Werkstück wird der Taststift aus seiner Ruheposition ausgelenkt und es wird mittels eines geeigneten Wandlers ein elektrisches Sensorsignal erzeugt, wenn die Auslenkung eine vorgegebene Tastschwelle überschreitet. Das elektrische Sensorsignal wird dann häufig in ein Infrarot-Signal umgewandelt, so dass auf diese Weise eine berührungs- und drahtlose Signalübertragung an das Sende-Empfängerelement des Tastsystems erreicht wird.

In diesem Sende-Empfängerelement werden dann die Infrarot-Signale wieder in elektrische Signale umgewandelt. Das Sende-Empfängerelement des Tastsystems ist mit einer Auswerteeinheit verbunden, zu der die elektrischen Signale weitergeleitet und ausgewertet werden und schließlich beispielsweise zur Steuerung der Werkzeugmaschine bereitgestellt werden. Dort kann dann, basierend auf der gemessenen Position des betreffenden Werkzeugmaschinenteils, die Position des zu vermessenden Werkstücks bestimmt werden.

Aus der Offenlegungsschrift DE 10 2006 054 978 A1 der Anmelderin ist ein Tastsystem der eingangs genannten Art bekannt, bei dem fortlaufend ein Steuerbefehl von einem Sendeelement an einen Tastkopf gesendet wird, wobei der Tastkopf nur bei Empfang des Steuerbefehls in einem aktiven Zustand gehalten wird. Auf diese Weise wird zum Zwecke der Verlängerung der Lebensdauer einer Batterie im Tastkopf die Anschaltzeit des Tastkopfes im aktiven Zustand minimiert.

Diese bekannte Ausführung eines Tastsystems hat den Nachteil, dass der Tastkopf im aktiven Zustand des Messbetriebs relativ viel elektrische Energie verbraucht.

Der Erfindung liegt daher die Aufgabe zu Grunde, ein Tastsystem der eingangs genannten Art, bzw. ein Verfahren zum Betrieb eines Tastsystems zu schaffen, welches insgesamt einen reduzierten Energieverbrauch des Tastkopfs ermöglicht.

Diese Aufgabe wird erfindungsgemäß durch die Merkmale des Anspruchs 1 bzw. des Anspruchs 9 gelöst.

Demnach umfasst das Tastsystem einen Tastkopf, der einen Taststift und ein Sensorelement aufweist. Durch Berührung des Taststifts ist durch das Sensorelement ein Sensorsignal erzeugbar. Ferner umfasst das Tastsystem ein Sende-Empfängerelement. Dabei sind der Tastkopf und das Sende-Empfängerelement derart konfiguriert, dass zwischen diesen eine drahtlose Datenübertragung herstellbar ist, so dass vom Tastkopf zum Sende-Empfängerelement eine Bereitschaftsinformation übertragbar ist. Die Bereitschaftsinformation ist durch zwei Bitfolgen, bestehend aus High-Bits und Low-Bits, übertragbar, wobei die Bitfolgen nach definierten Zeitintervallen sendbar sind und die zweite Bitfolge weniger High-Bits aufweist als die erste Bitfolge.

Die Sensorelemente können beispielsweise als druckempfindliche Sensorelemente ausgestaltet sein. In diesem Fall wird praktisch ohne merklichen Auslenkweg von den Sensorelementen auf Grund von Druckänderungen an den Auflagerpunkten des Taststifts im Tastkopf ein Sensorsignal erzeugt. Alternativ dazu können auch optisch wirkende Sensorelemente verwendet werden, bei denen durch optische Bauteile am Taststift der Lichteinfall auf ein optoelektronisches Bauteil im Tastkopf verändert wird, so dass auf diese Weise ein Sensorsignal erzeugt wird.

Mit Vorteil werden für die drahtlose Datenübertragung elektromagnetische Wellen bzw. Signale, insbesondere Infrarot-Signale verwendet. Bei einer drahtlosen Datenübertragung mittels Infrarot-Signale sind von einer Infrarot-Lichtquelle, die jeweils am Tastkopf und am Sende-Empfängerelement angeordnet sind, Infrarot-Signale sendbar und durch optoelektronische Empfänger, die jeweils am Sende-Empfängerelement und am Tastkopf angeordnet sind, in elektrische Signale umwandelbar. Der Tastkopf, bzw. dessen Sendeeinheit wird durch eine netzunabhängige Stromquelle versorgt, die beispielsweise eine Batterie, ein Kondensator oder eine Brennstoffzelle sein kann.

Im Folgenden wird als High-Bit ein Bit bezeichnet, dessen Pegel hoch ist gegenüber dem Pegel eines davon zu unterscheidenden Low-Bits. Beispielsweise kann das High-Bit einen normierten Pegel von 100 % bzw. 1 aufweisen, während das Low-Bit einen Pegel von 0 % oder 0 hat. Alternativ dazu kann aber das Low-Bit auch einen normierten Pegel aufweisen, der einen Zwischenwert zwischen 100% und 0% darstellt, und jedenfalls kleiner ist als der Pegel des High-Bits.

Die High-Bits können durch die einhüllende Kurve mehrerer mit einer Trägerfrequenz wiederkehrenden elektromagnetischen Signale erzeugt werden. Als einhüllende Kurve ist diejenige Kurve zu verstehen, durch welche benachbarte Maxima der elektromagnetischen Signale auf kürzestem Wege verbunden werden. Die gleiche Betrachtung kann prinzipiell auch für die Low-Bits angestellt werden. Wenn die Low-Bits einen Pegel von 0 haben, so ist die einhüllende Kurve eine Line auf dem Null-Pegel. Sofern die Low-Bits einen Pegel aufweisen, der einen Zwischenwert zwischen 100% und 0% darstellt, können auch diese Low-Bits durch die einhüllende Kurve mehrerer mit einer Trägerfrequenz wiederkehrenden elektromagnetischen Signale erzeugt werden. Entsprechend sind in der Anmeldung als High-Bits diejenigen Bits zu verstehen, die beim Senden mehr Strom bzw. Energie benötigen als Low-Bits. Somit muss beim Senden von High-Bits die Stromquelle im Tastkopf mehr Energie bereitstellen als beim Senden von Low-Bits. Mit Vorteil ist der Tastkopf so konfiguriert, dass beim Senden von Low-Bits keinerlei Energie verbraucht wird, wenn etwa eine Lichtquelle während einer Low-Bit-Phase nicht bestromt wird.

Die Bitfolgen können insbesondere als Datenrahmen verstanden werden, wobei zwischen zwei Bitfolgen jeweils eine längere Ruhephase bzw. eine Pause vorliegt, innerhalb welcher keine Information, insbesondere keine Bereitschaftsinformation, übertragbar ist. In bevorzugter Ausgestaltung der Erfindung sind die Pausen, innerhalb welcher keine Bereitschaftsinformation übertragen wird, länger als jede einzelne der beiden Bitfolgen, insbesondere 10mal größer, mit Vorteil 100mal größer als jede einzelne der beiden Bitfolgen.

Mit Vorteil sind nach dem Senden der ersten Bitfolge mehrere zweite Bitfolgen nacheinander nach definierten Zeitintervallen sendbar. Insbesondere können die Zeitintervalle stets gleich lang ausgestaltet sein. In bevorzugter Ausgestaltung der Erfindung ist das Tastsystem so konfiguriert, dass nach dem Senden der ersten Bitfolge eine Serie von fünf bis fünfzehn weiteren zweiten Bitfolgen sendbar ist.

In einer bevorzugten Ausgestaltung der Erfindung ist das Tastsystem so konfiguriert, dass zur Synchronisierung der beiden Bitfolgen die erste Bitfolge einen Header aufweist, wobei der Header mehr High-Bits aufweist als die zweite Bitfolge. Insbesondere kann es unter dem Aspekt der Minimierung des Energiebedarfs vorteilhaft sein, wenn die zweite Bitfolge nicht mehr als zwei High-Bits aufweist.

Mit Vorteil ist, ausgehend von einem Zeitpunkt innerhalb des Empfangs der ersten Bitfolge, ein erstes Zeitfenster bestimmbar, wobei im ersten Zeitfenster ein High-Bit der zweiten Bitfolge wirksam empfangbar ist. Unter dem Begriff wirksam empfangbar, bzw. wirksam empfangen, ist zu verstehen, dass ein derartiger Empfang zur Folge hat, dass der Tastkopf erfolgreich seine Bereitschaftsinformation übertragen hat und der Messbetrieb fortführbar bleibt.

Weiterhin kann das Tastsystem so ausgestaltet sein, dass, ausgehend von einem Zeitpunkt innerhalb des Empfangs der ersten Bitfolge, ein zweites Zeitfenster bestimmbar ist, in welchem ein Low-Bit der zweiten Bitfolge wirksam empfangbar ist.

Im Hinblick auf die Übertragungssicherheit, insbesondere bei periodischen Störsignalen, kann es vorteilhaft sein, wenn mehrere High-Bits und mehrere Low-Bits der zweiten Bitfolge wirksam empfangbar sind und der zeitliche Abstand zwischen den Mitten der ersten Zeitfenster und der zweiten Zeitfenster gleich groß ist.

Weiterhin umfasst die Erfindung auch ein Verfahren zum Betrieb eines Tastsystems mit den beschriebenen Komponenten mit folgenden Schritten: Senden der ersten Bitfolge, bestehend aus High-Bits und Low-Bits, Senden der zweiten Bitfolge, bestehend aus mindestes einem High-Bit und Low-Bits nach einem definierten Zeitintervall, wobei die zweite Bitfolge weniger High-Bits aufweist als die erste Bitfolge.

Mit Vorteil werden dabei nach dem Senden der ersten Bitfolge mehrere zweite Bitfolgen nacheinander nach definierten Zeitintervallen gesendet.

Insbesondere kann nach dem Senden der zweiten Bitfolge oder der zweiten Bitfolgen wieder eine erste Bitfolge gesendet werden, was im Hinblick auf die Synchronisation zwischen Tastkopf und Sende-Empfängerelement vorteilhaft sein kann.

Vorteilhafte Ausbildungen der Erfindung entnimmt man den abhängigen Ansprüchen.

Weitere Einzelheiten und Vorteile des erfindungsgemäßen Tastsystems des Verfahrens ergeben sich aus der nachfolgenden Beschreibung eines Ausführungsbeispiels anhand der beiliegenden Figuren.

Es zeigen die

Figur 1 ein Tastsystem in einer Seitenansicht,

Figur 2 eine Detailansicht mit einem Sensorelement im Tastkopf,

Figur 3a eine erste Bitfolge durch welche eine Bereitschaftsinformation übertragbar ist,

Figur 3b eine zweite Bitfolge durch welche die Bereitschaftsinformation übertragbar ist,

Figur 3c einen zeitlichen Verlauf und die Reihenfolge der gesendeten Bitfolgen.

Figur 4 das Tastsystem, in einer Lage, in der der Tastkopf, bzw. dessen Taststift, ein Werkstück berührt.

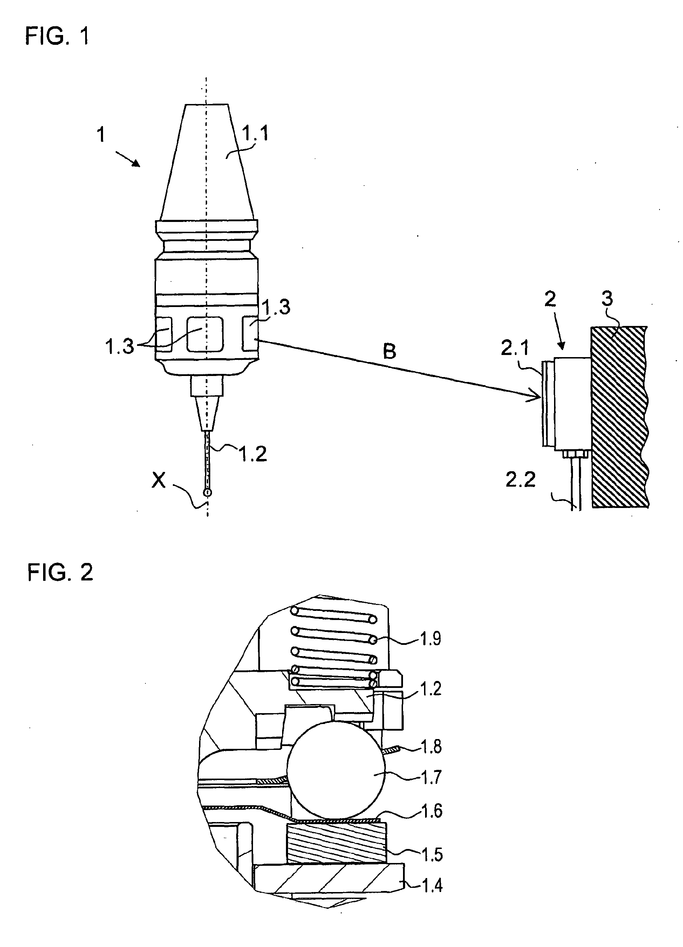

In der Figur 1 ist ein Tastsystem gezeigt, welches einen Tastkopf 1 und ein Sende-Empfängerelement 2 umfasst. Der Tastkopf 1 kann mittels eines Spannkonus 1.1 in eine Spindel einer Werkzeugmaschine eingespannt werden. Die Längsachse X des Tastkopfs 1 stellt gleichzeitig die Mittelachse des Spannkonus 1.1 dar. Parallel und konzentrisch zur Längsachse X ist am Tastkopf 1 ein zylindrischer Taststift 1.2 vorgesehen, welcher an einem Ende eine Antastkugel aufweist.

In der Figur 2 ist eine Teilansicht auf das Innere des Tastkopfs 1 gezeigt. Auf einer Leiterplatte 1.4 sind insgesamt drei druckempfindliche Sensorelemente 1.5 platziert, von denen in der Ansicht der Figur 2 nur eines zu sehen ist. Auf der Oberfläche jedes Sensorelements 1.5 ist jeweils eine Membran 1.6 angeordnet, die von jeweils einer Kugel 1.7 berührt wird, wobei die Kugeln 1.7 durch einen Halter 1.8 exakt an einer vorbestimmten Position relativ zu den Sensorelementen 1.5 fixiert werden. Auf jeder Kugel 1.7 ruht ein Arm des Taststifts 1.2, vorgespannt durch jeweils eine Feder 1.9. Zur Energieversorgung des Tastkopfs 1 ist eine, in den Figuren nicht dargestellte, Batterie im Tastkopf 1 angeordnet.

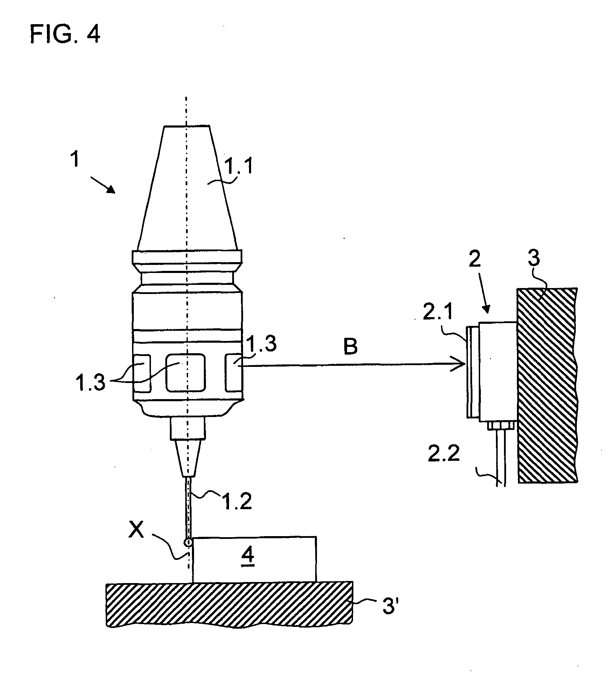

Ferner weist der Tastkopf 1 Sende- und Empfängereinheiten 1.3 auf, die wie in den Figuren 1 und 4 dargestellt, über dem Umfang des Tastkopfs 1 versetzt angeordnet sind. Im gezeigten Beispiel sind am Tastkopf 1 sechs Sende- und Empfängereinheiten 1.3 vorgesehen, die jeweils um 60° versetzt entlang einer Umfangslinie am Tastkopf 1 angeordnet sind. Die Sende- und Empfängereinheiten 1.3 umfassen jeweils eine Infrarot-Lichtquelle, die von der Batterie im Tastkopf 1 gespeist werden. Durch die Sende- und Empfängereinheiten 1.3 des Tastkopfs 1 können auch in die Sende-Empfängereinheiten 1.3 eingestrahlte Infrarot-Signale empfangen werden, die dann durch optoelektronische Empfänger in elektrische Signale umgewandelt werden.

Das Sende-Empfängerelement 2 ist im vorgestellten Beispiel an einem stationären Bauteil 3 der Werkzeugmaschine befestigt und weist ein für Infrarotlicht durchlässiges Fenster 2.1 auf, hinter dem eine Infrarot-Lichtquelle und ein optoelektronischer Empfänger angeordnet sind. Durch ein mehradriges Kabel 2.2 ist das Sende-Empfängerelement 2 zu dessen Energieversorgung am Stromnetz angeschlossenen und überdies mit einer Folgelektronik bzw. mit einer Numerischen Steuerung der betreffenden Werkzeugmaschine elektrisch verbunden.

Der Tastkopf 1 und das Sende-Empfängerelement 2 sind derart konfiguriert, dass zwischen diesen eine drahtlose Datenübertragung möglich ist, insbesondere können der Tastkopf 1 und das Sende-Empfängerelement 2 sowohl Infrarot-Signale senden als auch empfangen.

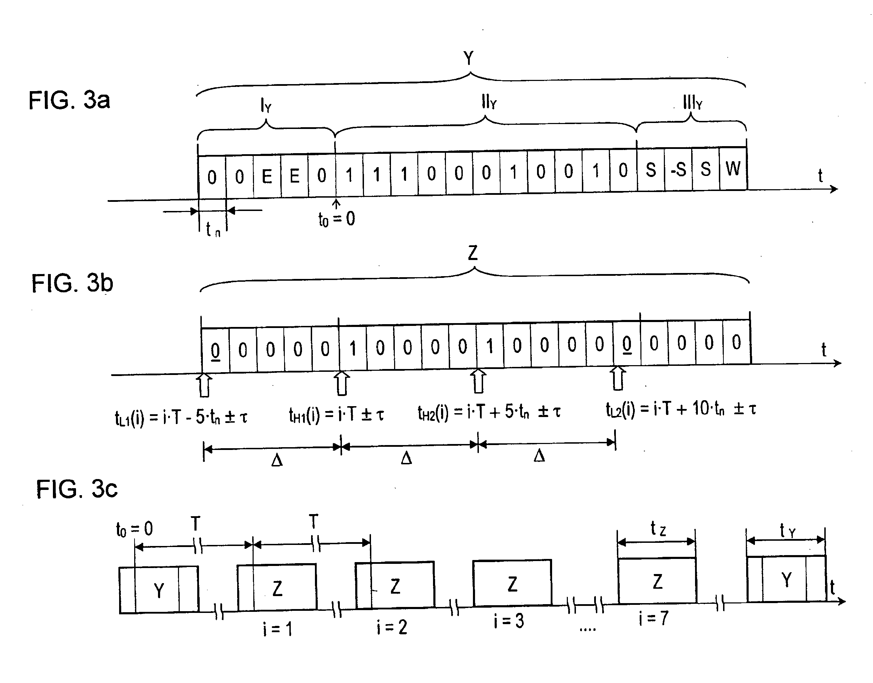

Im Messbetrieb wird der Tastkopf 1 innerhalb eines Bearbeitungsraumes der Werkzeugmaschine verfahren oder um eine Achse, die orthogonal zur Längsachse X ausgerichtet ist, geschwenkt. Von der Infrarot-Lichtquelle des Tastkopfes 1 wird im Messbetrieb laufend eine Bereitschaftsinformation B an das Sende-Empfängerelement 2 übertragen, um zu signalisieren, dass die Kommunikationsverbindung zum Tastkopf 1 korrekt arbeitet. Die Bereitschaftsinformation B wird also durch Infrarot-Signale in Form von Infrarotlichtimpulsen übermittelt und kann hier insbesondere durch zwei Bitfolgen Y, Z übertragen werden, die jeweils nach definierten Zeitintervallen T, bzw. in einem definierten Zeitversatz, vom Tastkopf 1 gesendet werden (Figur 3c). Zwischen dem Senden bzw. zwischen der Übertragung jeweils einer Bitfolge Y, Z liegt eine Pause, in welcher keine Übertragung der Bereitschaftsinformation B stattfindet. Dabei sind die Pausen wesentlich länger als die Bitfolgen Y, Z selbst. Die Infrarotlichtimpulse werden mit einer Trägerfrequenz moduliert. Der Pegel der modulierten Infrarotlichtimpulse soll definitionsgemäß 100 % bzw. eins betragen. Im gezeigten Beispiel wird ein High-Bit durch die einhüllende Kurve von mehreren Infrarotlichtimpulsen gebildet. Dabei sind die gesendeten Bitfolgen Y, Z mit einer Trägerfrequenz, welche hier 5 MHz beträgt, moduliert.

Bei Empfang der Bereitschaftsinformation B bzw. der Bitfolgen Y, Z durch das Sende-Empfängerelement 2 wird der Messbetrieb aufrechterhalten. Ist aber die Übertragung der Bereitschaftsinformation B unterbrochen, z. B. durch eine Störkante, wird die Werkzeugmaschine gestoppt.

In der Figur 3a ist die erste Bitfolge Y, die im vorgestellten Ausführungsbeispiel aus insgesamt zwanzig Bits besteht, gezeigt. Die Bitfolge Y kann entsprechend der zu übertragenden Information in drei Bereiche $I_Y$, $II_Y$, $III_Y$ aufgeteilt werden. Der erste Bereich $I_Y$, enthält die Information, ob der Taststift 1.2 seit Empfang der letzten Bitfolge Y, Z vom Ruhezustand in den ausgelenkten Zustand überführt wurde. Wenn ja, werden die Eventbits E auf "1" gesetzt, also als High-Bits ausgestaltet. Der zweite Bereich wird auch als Header $II_Y$ bezeichnet. Der Header $II_Y$ dient mit seinem spezifischen Bitmuster im Wesentlichen zur Erhöhung der Übertragungssicherheit und zu Synchronisationszwecken. Das Bitmuster des Headers $II_Y$ umfasst insgesamt elf Bits, wovon fünf als High-Bits und sechs als Low-Bits ausgestaltet sind. Der dritte Bereich $III_Y$ beinhaltet zum einen die Information, ob sich der Taststift 1.2 im ausgelenkten Zustand befindet. In diesem Zusammenhang sind die ersten drei Bits, nämlich die Zustandsbits S, des dritten Bereichs $III_Y$ relevant. Sofern sich der Taststift 1.2 im ausgelenkten Zustand befindet, werden das erste und das dritte Zustandsbit S als High-Bits ausgestaltet, wogegen das zweite Zustandsbit -S den inversen Wert, hier also 0, annimmt, bzw. dann als Low-Bit ausgestaltet ist. Des Weiteren umfasst der dritte Bereich $III_Y$ ein Batteriewarnungsbit W, welches als Low-Bit ausgestaltet ist, solange die Batterie im Tastkopf 1 eine ausreichende Ladung aufweist. Für den Fall, dass der Ladungszustand der Batterie sich unter eine vorgegebene Schwelle bewegt, wird das Batteriewarnungsbit W als High-Bit gesendet.

In der Figur 3b ist die zweite Bitfolge Z dargestellt, welche lediglich zwei High-Bits umfasst und somit weniger Energie zum Senden benötigt als die erste Bitfolge Y.

Sämtliche Bits innerhalb der Bitfolgen Y, Z weisen eine zeitliche Länge $t_n$ von 6,4 μs auf, so dass also jede der beiden Bitfolgen Y, Z zeitlich gesehen insgesamt eine Länge $t_Y$, $t_Z$ von 128 μs hat.

Üblicherweise wird bei der Vermessung eines Werkstückes 4 der Tastkopf 1 vergleichsweise lange Zeit im Bearbeitungsraum der Werkzeugmaschine verfahren bis letztlich tatsächlich ein Antastvorgang stattfindet. Während dieser Zeit muss die Bereitschaftsinformation B übertragen werden. Zu diesem Zweck wird zunächst die erste Bitfolge Y vom Tastkopf 1 an das Sende-Empfängerelement 2 gesendet und dort empfangen und ausgewertet. Während des bloßen Verfahrens des Tastkopfes 1 sind die beiden Event-Bits E Low-Bits. Ebenso sind die Zustandsbits S als Low-Bits ausgestaltet, während das inverse Zustandsbit -S ein High-Bit ist. Sofern die Batterie in gutem Zustand ist, wird auch das Warnbit ein Low-Bit sein. Bei Vorliegen eines zu übertragenden Low-Bits wird die Infrarot-Lichtquelle nicht bestromt. Im Gegensatz dazu muss von der Batterie elektrische Energie abgegeben werden um die, im vorliegenden Fall, fünf High-Bits der ersten Bitfolge Y zu senden.

Der Tastkopf 1 weist einen Timer auf und ist weiterhin so konfiguriert, dass dieser nach dem definierten Zeitintervall T die zweite Bitfolge Z sendet. Im vorgestellten Ausführungsbeispiel beträgt das Zeitintervall T = 20 ms. Somit ist hier das Zeitintervall T etwa 156mal länger als die Länge $t_Y$, $t_Z$ der beiden Bitfolgen Y, Z. Entsprechend ist also die Pause zwischen den Bitfolgen Y, Z bzw. benachbarten zweiten Bitfolgen Y vergleichsweise lange. Die zweite Bitfolge Z weist weniger High-Bits auf als die erste Bitfolge Y, insbesondere weist die zweite Bitfolge Z weniger High-Bits auf als der Header $II_Y$ der ersten Bitfolge Y.

Im Sende-Empfängerelement 2 wird zunächst die erste Bitfolge Y empfangen und durch die Auswertung der spezifischen Bitsequenz des Headers $II_Y$ festgestellt, dass eine einwandfreie Informationsübertragung zwischen dem Tastkopf 1 und dem Sende-Empfängerelement 2 gewährleistet ist und zudem dass kein Antastvorgang vorliegt. Das Sende-Empfängerelement 2 umfasst ferner ebenfalls einen Timer. Zunächst wird in diesem Timer der Zeitpunkt $t_0$ des Empfangs des ersten Bits des Headers $II_Y$ auf Null gesetzt.

Beim darauf folgenden ersten (i = 1) Empfang der zweiten Bitfolge Z wird zunächst überprüft, ob die beiden High-Bits der zweiten Bitfolge Z jeweils innerhalb eines vorgegebenen Zeitfensters liegen. Zu diesem Zweck ist im Sende-Empfängerelement 2 ein Zeitwert $\tau$ abgelegt, welcher die Größe des Zeitfensters definiert. Die Lage des Zeitfensters wird ausgehend vom Zeitpunkt $t_0$ bestimmt. Somit wird also überprüft, ob die empfangenen High-Bits innerhalb der Zeitfenster $t_{H1}$ = T $\pm$ $\tau$, bzw. $t_{H2}$ = T + 5·$t_n$ $\pm$ $\tau$ liegen, mit T + $t_0$ = T, da $t_0$ = 0. Die Mitten der Zeitfenster $t_{H1}$ und $t_{H2}$ befinden sich in einem zeitlichen Abstand $\Delta$ = 5·$t_n$.

Zur Erhöhung der Übertragungssicherheit, trotz reduzierter Anzahl von High-Bits in der zweiten Bitfolge Z, wird weiterhin geprüft, ob zwei Low-Bits in weiteren Zeitfenstern $t_{L1}$ = T - 5·$t_n$ $\pm$ $\tau$, bzw. $t_{L2}$ = T + 10·$t_n$ $\pm$ $\tau$ empfangen wurden. Im Ausführungsbeispiel wird zu diesem Zweck untersucht, ob ein innerhalb der Zeitfenster $t_{L1}$ und $t_{L2}$ empfangenes Signal einen Pegel aufweist, der einen vorgebenden Grenzpegel $\sigma_L$ unterschreitet. Wenn ja, wird davon ausgegangen, dass das empfangene schwache Signal beispielsweise von einer Beleuchtungseinrichtung an der Werkzeugmaschine herrührt und somit die Übertragung der Bereitschaftsinformation korrekt ist. Die Mitten der Zeitfenster $t_{L1}$ und $t_{L2}$ befinden sich auch in dem zeitlichen Abstand $\Delta$ = 5·$t_n$ zu den Mitten der jeweils benachbarten Zeitfenster $t_{H1}$ und $t_{H2}$ Durch die Heranziehung von Low-Bits, im gleichen zeitlichen Abstand $\Delta$ wird zudem sichergestellt, dass keine periodischen Störsignale, die zufällig Intensitätsmaxima mit einem Abstand $\Delta$ aufweisen fälschlicherweise den Empfang der Bereitschaftsinformation B bewirken. Zur Erreichung einer noch höheren Übertragungssicherheit wird der Mittelwert aller empfangenen Signalpegel aller Bits der zweiten Bitfolge Z gebildet und mit einem weiteren Grenzpegel $\sigma_M$ verglichen. Dabei ist der weitere Grenzpegel $\sigma_M$ so vorgegeben, dass dieser größer ist als der Grenzpegel $\sigma_L$. Durch diese Überprüfung kann festgestellt werden, wie hoch die Störsignale bzw. der empfangene Störpegel über die gesamte zeitliche Länge der zweiten Bitfolge Z ist. Sofern sich herausstellt, dass die Übertragung der Bereitschaftsinformation in einem Umfeld mit unzulässig hohen Störsignalen unternommen wird, führt dies zu einem Maschinenstopp. Die Überprüfung des Mittelwerts aller empfangenen Signalpegel unterliegt weniger strikten Bedingungen als die Überprüfung der innerhalb der Zeitfenster $t_{L1}$ und $t_{L2}$ empfangenen Signale.

Es können also nur die entsprechenden High-Bits und Low-Bits wirksam empfangen werden, wenn diese innerhalb der Zeitfenster $t_{H1}$, $t_{H2}$, $t_{L1}$ und $t_{L2}$ empfangen werden, wobei ein wirksamer Empfang bedeutet, dass die Bereitschaftsinformation B korrekt übertragen wurde, was zur Folge hat, dass der Messbetrieb fortführbar bleibt.

Nachdem also nach der ersten Bitfolge Y vom Tastkopf 1 die zweite Bitfolge Z gesendet wurde, wird als Nächstes nach Verstreichen eines weiteren Zeitintervalls T wiederum eine weitere zweite Bitfolge Z (i = 2) gesendet. Die Zeitfenster $t_{H1}$, $t_{H2}$, $t_{L1}$ und $t_{L2}$ werden nun zu $t_{H1}$ = 2·T $\pm$ $\tau$, $t_{H2}$ = 2·T + 5·$t_n$ $\pm$ $\tau$, $t_{L1}$ = 2·T - 5·$t_n$ $\pm$ $\tau$, bzw. $t_{L2}$ = 2·T + 10·$t_n$ $\pm$ $\tau$ bestimmt. Das Senden der zweiten Bitfolge Z wird im vorgestellten Ausführungsbeispiel insgesamt sieben Mal (i = 1, 2, 3, ...7) vorgenommen, ehe erneut die erste Bitfolge Y übertragen wird. Die Übertragung der ersten Bitfolge Y hat zur Folge, dass dann wieder der Zeitpunkt $t_0$ = 0 als erneute Referenz innerhalb des Empfangs der erste Bitfolge Y gesetzt wird von der aus wieder die zeitliche Lage der Zeitfenster $t_{H1}$, $t_{H2}$, $t_{L1}$ und $t_{L2}$ bestimmt wird. Somit kann die Bestimmung der Zeitfenster $t_{H1}$, $t_{H2}$, $t_{L1}$ und $t_{L2}$ nach folgenden Zusammenhängen beschrieben werden:

$$t_{H1}(i) = i \cdot T \pm \tau,$$

$$t_{H2}(i) = i \cdot T + 5 \cdot t_n \pm \tau,$$

$$t_{L1}(i) = i \cdot T - 5 \cdot t_n \pm \tau,$$

$$t_{L2}(i) = i \cdot T + 10 \cdot t_n \pm \tau.$$

Die Größe der Zeitfenster $t_{H1}$, $t_{H2}$, $t_{L1}$ und $t_{L2}$ und damit der Zeitwert $\tau$ hängt ab von der Anzahl i der hintereinander gesendeten zweiten Bitfolgen Z und von der maximal möglichen Drift im Timer. In der Praxis hat sich gezeigt, dass die Anzahl i mit Vorteil zwischen acht bis zehn liegt unter Abwägung der möglichen Stromersparnis und der Übertragungssicherheit. Somit sind also nach dem Senden der ersten Bitfolge Y acht bis zehn zweite Bitfolgen Z nacheinander nach definierten Zeitintervallen T sendbar, bzw. ist eine Serie von acht bis zehn weiteren zweiten Bitfolgen sendbar.

In der Figur 4 ist eine Situation dargestellt, in welcher der Taststift 1.2 ein Werkstück 4, welches an einem Aufspanntisch 3' der Werkzeugmaschine befestigt ist, antastet. Im dieser Situation wird von den Sensorelementen 1.5 ein Sensorsignal erzeugt. Das Sensorsignal führt, ggf. auch innerhalb eines Zeitintervalls T, zum sofortigen Senden der ersten Bitfolge Y, wobei dann die beiden Eventbits EE der Bitfolge Y den Wert 1 annehmen, also dann in diesem relativ seltenen Fall High-Bits sind. Diese Information bzw. diese Bittfolge Y wird zum Sende-Empfängerelement 2 übertragen und über das Kabel 2.2 einer Folgeelektronik weitergegeben. Sodann wird die Position bestimmt, an welcher die Berührung des Werkstücks erfolgt ist und die Folgeelektronik löst gleichzeitig einen Stopp der Werkzeugmaschine aus, so dass der Tastkopf 1 relativ zum Werkstück 4 nicht mehr bewegt wird. Üblicherweise verfügen Werkzeugmaschinen über genaue Messeinrichtungen, welche die Spindelposition bestimmen, so dass diese Messwerte für die Bestimmung der Berührposition verwendet werden.

Durch die Erfindung ist es nunmehr möglich mit vergleichsweise wenigen zu sendenden High-Bits eine sichere Übertragung der Bereitschaftsinformation zu erreichen. Insbesondere ist eine überaus energiesparende Betriebsweise erreichbar, wenn, wie im vorgestellten Ausführungsbeispiel, die Lichtquelle nur für das Absetzten der High-Bits betrieben bzw. bestromt werden muss.

## Patentansprüche

1. Tastsystem, umfassend

   - einen Tastkopf (1), der einen Taststift (1.2) und ein Sensorelement (1.5) aufweist, wobei durch Berührung des Taststifts (1.2) durch das Sensorelement (1.5) ein Sensorsignal erzeugbar ist, sowie
   - ein Sende-Empfängerelement (2), wobei

   der Tastkopf (1) und das Sende-Empfängerelement (2) derart konfiguriert sind, dass zwischen diesen eine drahtlose Datenübertragung herstellbar ist, so dass vom Tastkopf (1) zum Sende-Empfängerelement (2) eine Bereitschaftsinformation (B) übertragbar ist,

   **dadurch gekennzeichnet, dass** die Bereitschaftsinformation (B) durch zwei Bitfolgen (Y, Z), bestehend aus High-Bits und Low-Bits, übertragbar ist, wobei die Bitfolgen (Y, Z) nach definierten Zeitintervallen (T) sendbar sind und die zweite Bitfolge (Z) weniger High-Bits aufweist als die erste Bitfolge (Y).

2. Tastsystem gemäß dem Anspruch 1, **dadurch gekennzeichnet, dass** nach dem Senden der ersten Bitfolge (Y) mehrere zweite Bitfolgen (Z) nacheinander nach definierten Zeitintervallen (T) sendbar sind.

3. Tastsystem gemäß dem Anspruch 1 oder 2, **dadurch gekennzeichnet, dass** nach dem Senden der zweiten Bitfolge (Z) oder der zweiten Bitfolgen (Z) wieder eine erste Bitfolge (Y) sendbar ist.

4. Tastsystem gemäß einem der vorhergehenden Ansprüche, **dadurch gekennzeichnet, dass** der Tastkopf (1) und das Sende-Empfängerelement (2) derart konfiguriert sind, dass zur Synchronisierung der beiden Bitfolgen (Y, Z) die erste Bitfolge (Y) einen Header ($II_Y$) aufweist, wobei der Header ($II_Y$) mehr High-Bits aufweist als die zweite Bitfolge (Z).

5. Tastsystem gemäß einem der vorhergehenden Ansprüche, **dadurch gekennzeichnet, dass** die zweite Bitfolge (Z) nicht mehr als zwei High-Bits aufweist.

6. Tastsystem gemäß einem der vorhergehenden Ansprüche, **dadurch gekennzeichnet, dass**, ausgehend von einem Zeitpunkt ($t_0$) innerhalb des Empfangs der ersten Bitfolge (Y), ein erstes Zeitfenster ($t_{H1}$, $t_{H2}$) bestimmbar ist, in welchem ein High-Bit der zweiten Bitfolge (Z) wirksam empfangbar ist.

7. Tastsystem gemäß einem der vorhergehenden Ansprüche, **dadurch gekennzeichnet, dass**, ausgehend von einem Zeitpunkt ($t_0$) innerhalb des Empfangs der ersten Bitfolge (Y), ein zweites Zeitfenster ($t_{L1}$, $t_{L2}$) bestimmbar ist, in welchem ein Low-Bit der zweiten Bitfolge (Z) wirksam empfangbar ist.

8. Tastsystem gemäß dem Anspruch 6 und 7, **dadurch gekennzeichnet, dass** das mehrere High-Bits und mehrere Low-Bits der zweiten Bitfolge (Z) wirksam empfangbar sind und der zeitliche Abstand ($\Delta$) zwischen den Mitten der ersten Zeitfenster ($t_{H1}$, $t_{H2}$) und der zweiten Zeitfenster ($t_{L1}$, $t_{L2}$) gleich groß ist.

9. Verfahren zum Betrieb eines Tastsystems, das einen Tastkopf (1) und ein Sende-Empfängerelement (2) aufweist, wobei der Tastkopf (1) einen Taststift (1.2) und ein Sensorelement (1.5) umfasst und zwischen dem Tastkopf (1) und dem Sende-Empfängerelement (2) eine drahtlose Datenübertragung herstellbar ist, bei der vom Tastkopf (1) zum Sende-Empfängerelement (2) eine Bereitschaftsinformation (B), die zwei Bitfolgen (Y, Z) umfasst, übertragen wird, mit folgenden Schritten:

- Senden der ersten Bitfolge (Y), bestehend aus High-Bits und Low-Bits,
- Senden der zweiten Bitfolge (Z), bestehend aus mindestes einem High-Bit und Low-Bits nach einem definierten Zeitintervall (T), wobei

die zweite Bitfolge (Z) weniger High-Bits aufweist als die erste Bitfolge (Y).

**10.** Verfahren gemäß dem Anspruch 9, wobei nach dem Senden der ersten Bitfolge (Y) mehrere zweite Bitfolgen (Z) nacheinander nach definierten Zeitintervallen (T) gesendet werden.

**11.** Verfahren gemäß dem Anspruch 9 oder 10, wobei nach dem Senden der zweiten Bitfolge (Z) oder der zweiten Bitfolgen (Z) wieder eine erste Bitfolge (Y) gesendet wird.

**12.** Verfahren gemäß einem der Ansprüche 9 bis 11, wobei zur Synchronisierung der beiden Bitfolgen (Y, Z) die erste Bitfolge (Y) einen Header ($II_Y$) aufweist, wobei der Header ($II_Y$) mehr High-Bits aufweist als die zweite Bitfolge (Z).

**13.** Verfahren gemäß einem der Ansprüche 9 bis 12, wobei die zweite Bitfolge (Z) nicht mehr als zwei High-Bits aufweist.

**14.** Verfahren gemäß einem der Ansprüche 9 bis 13, wobei, ausgehend von einem Zeitpunkt ($t_0$) innerhalb des Empfangs der ersten Bitfolge (Y), die zeitliche Lage eines ersten Zeitfensters ($t_{H1}$, $t_{H2}$) bestimmt wird und ein High-Bit der zweiten Bitfolge (Z) in diesem Zeitfenster ($t_{H1}$, $t_{H2}$) wirksam empfangen wird.

**15.** Verfahren gemäß einem der Ansprüche 9 bis 14, wobei, ausgehend von einem Zeitpunkt ($t_0$) innerhalb des Empfangs der ersten Bitfolge (Y), die zeitliche Lage eines ersten Zeitfensters ($t_{L1}$, $t_{L2}$) bestimmt wird und ein Low-Bit der zweiten Bitfolge (Z) in diesem Zeitfenster ($t_{H1}$, $t_{H2}$) wirksam empfangen wird,

**16.** Verfahren gemäß dem Anspruch 14 und 15, wobei mehrere High-Bits und mehrere Low-Bits der zweiten Bitfolge (Z) wirksam empfangen werden, wobei der zeitliche Abstand ($\Delta$) zwischen den Mitten der ersten Zeitfenster ($t_{H1}$, $t_{H2}$) und der zweiten Zeitfenster ($t_{L1}$, $t_{L2}$) gleich groß ist.

**Claims**

**1.** Sensing system comprising

- a sensing head (1) that has a sensing pin (1.2) and a sensor element (1.5), wherein the sensing pin (1.2) being touched by the sensor element (1.5) can produce a sensor signal, and
- a transceiver element (2), wherein

the sensing head (1) and the transceiver element (2) are configured such that wireless data transmission can be set up between them, as a result of which a piece of standby information (B) can be transmitted from the sensing head (1) to the transceiver element (2),

**characterized in that** the piece of standby information (B) can be transmitted by two bit sequences (Y, Z), comprising high bits and low bits, the bit sequences (Y, Z) being able to be sent after defined time intervals (T) and the second bit sequence (Z) having fewer high bits than the first bit sequence (Y).

**2.** Sensing system according to Claim 1, **characterized in that** after the first bit sequence (Y) has been sent it is possible for a plurality of second bit sequences (Z) to be sent in succession after defined time intervals (T).

**3.** Sensing system according to Claim 1 or 2, **characterized in that** after the second bit sequence (Z) or the second bit sequences (Z) has/have been sent it is possible for a first bit sequence (Y) to be sent again.

**4.** Sensing system according to one of the preceding claims, **characterized in that** the sensing head (1) and the transceiver element (2) are configured such that for the purpose of synchronizing the two bit sequences (Y, Z) the first bit sequence (Y) has a header ($II_Y$), the header ($II_Y$) having more high bits than the second bit sequence (Z).

**5.** Sensing system according to one of the preceding claims, **characterized in that** the second bit sequence (Z) has no more than two high bits.

**6.** Sensing system according to one of the preceding claims, **characterized in that** from an instant ($t_0$) within the reception of the first bit sequence (Y) it is possible to determine a first time window ($t_{H1}$, $t_{H2}$) in which a high bit from the second bit sequence (Z) can be effectively received.

**7.** Sensing system according to one of the preceding claims, **characterized in that** from an instant ($t_0$) within the reception of the first bit sequence (Y) it is possible to determine a second time window ($t_{L1}$, $t_{L2}$) in which a low bit from the second bit sequence (Z) can be effectively received.

8. Sensing system according to Claims 6 and 7, **characterized in that** the plurality of high bits and the plurality of low bits from the second bit sequence (Z) can be effectively received and the interval of time ($\Delta$) between the centres of the first time windows ($t_{H1}$, $t_{H2}$) and the second time windows ($t_{L1}$, $t_{L2}$) is of the same magnitude.

9. Method for operating a sensing system that has a sensing head (1) and a transceiver element (2), wherein the sensing head (1) comprises a sensing pin (1.2) and a sensor element (1.5) and wireless data transmission can be set up between the sensing head (1) and the transceiver element (2), said wireless data transmission involving a piece of standby information (B) that comprises two bit sequences (Y, Z) being transmitted from the sensing head (1) to the transceiver element (2), having the following steps:

   - the first bit sequence (Y) is sent, comprising high bits and low bits,
   - the second bit sequence (Z) is sent, comprising at least one high bit and low bits after a defined time interval (T), wherein

   the second bit sequence (Z) has fewer high bits than the first bit sequence (Y).

10. Method according to Claim 9, wherein after the first bit sequence (Y) has been sent, a plurality of second bit sequences (Z) are sent in succession after defined time intervals (T).

11. Method according to Claim 9 or 10, wherein after the second bit sequence (Z) or the second bit sequences (Z) has/have been sent, a first bit sequence (Y) is sent again.

12. Method according to one of Claims 9 to 11, wherein for the purpose of synchronizing the two bit sequences (Y, Z) the first bit sequence (Y) has a header ($II_Y$), the header ($II_Y$) having more high bits than the second bit sequence (Z).

13. Method according to one of Claims 9 to 12, wherein the second bit sequence (Z) has no more than two high bits.

14. Method according to one of Claims 9 to 13, wherein from an instant ($t_0$) within the reception of the first bit sequence (Y) the timing of a first time window ($t_{H1}$, $t_{H2}$) is determined and a high bit from the second bit sequence (Z) is effectively received in this time window ($t_{H1}$, $t_{H2}$).

15. Method according to one of Claims 9 to 14, wherein from an instant ($t_0$) within the reception of the first bit sequence (Y) the timing of a second time window ($t_{L1}$, $t_{L2}$) is determined and a low bit from the second bit sequence (Z) is effectively received in this time window ($t_{L1}$, $t_{L2}$).

16. Method according to Claims 14 and 15, wherein a plurality of high bits and a plurality of low bits from the second bit sequence (Z) are effectively received, the interval of time ($\Delta$) between the centres of the first time windows ($t_{H1}$, $t_{H2}$) and the second time windows ($t_{L1}$, $t_{L2}$) being of the same magnitude.

## Revendications

1. Système de balayage, comprenant :

   - une tête de balayage (1) comportant une tige de balayage (1.2) et un élément détecteur (1.5), dans lequel un signal de détecteur peut être généré par l'élément détecteur (1.5) par contact avec la tige de balayage (1.2), et
   - un élément émetteur-récepteur (2), dans lequel la tête de balayage (1) et l'élément émetteur récepteur (2) sont configurés de manière à ce qu'une transmission de données sans fil puisse être établie entre ceux-ci afin qu'une information de préparation (B) puisse être transmise de la tête de balayage (1) à l'émetteur-récepteur (2),

   **caractérisé en ce que** l'information de préparation (B) peut être transmise par l'intermédiaire de deux séquences binaires (Y, Z) constituées de bits de poids fort et binaires de poids faible, dans lequel les séquences de bits (Y, Z) peuvent être émises après des intervalles de temps définis (T) et la seconde séquence binaire (Z) comporte moins de bits de poids fort que la première séquence binaire (Y).

2. Système de balayage selon la revendication 1, **caractérisé en ce qu'**après l'émission de la première séquence binaire (Y), une pluralité de secondes séquences binaires (Z) peuvent être émises séquentiellement après des intervalles de temps définis (T).

3. Système de balayage selon la revendication 1 ou 2, **caractérisé en ce qu'**une première séquence binaire (Y) peut être réémise après l'émission de la seconde séquence binaire (Z) ou des secondes séquences binaires (Z).

4. Système de balayage selon l'une quelconque des revendications précédentes, **caractérisé en ce que** la tête de balayage (1) et l'élément émetteur-récepteur (2) sont configurés de manière à ce que la première séquence binaire (Y) comporte un entête ($II_Y$) destiné à la synchronisation des deux séquences binaires (Y, Z), dans lequel l'entête ($II_Y$) comporte plus de bits de poids fort que la seconde séquence binaire (Z).

5. Système de balayage selon l'une quelconque des revendications précédentes, **caractérisé en ce que** la seconde séquence binaire (Z) ne comporte pas plus de deux bits de poids fort.

6. Système de balayage selon l'une quelconque des revendications précédentes, **caractérisé en ce qu'**il est possible de déterminer, à partir d'un instant ($t_0$) antérieur à la réception de la première séquence binaire (Y), une première fenêtre temporelle ($t_{H1}$, $t_{H2}$) dans laquelle un bit de poids fort de la seconde séquence binaire (Z) peut être reçu de manière effective.

7. Système de balayage selon l'une quelconque des revendications précédentes, **caractérisé en ce qu'**il est possible de déterminer, à partir d'un instant ($t_0$) antérieur à la réception de la première séquence binaire (Y), une seconde fenêtre temporelle ($t_{L1}$, $t_{L2}$) dans laquelle un bit de poids faible de la seconde séquence binaire (Z) peut être reçu de manière effective.

8. Système de balayage selon les revendications 6 et 7, **caractérisé en ce qu'**une pluralité de bits de poids fort et une pluralité de bits de poids faible de la seconde séquence binaire (Z) peuvent être reçus de manière effective et **en ce que** l'intervalle de temps ($\Delta$) entre les milieux de la première fenêtre temporelle ($t_{H1}$, $t_{H2}$) et de la seconde fenêtre temporelle ($t_{L1}$, $t_{L2}$) est de même taille.

9. Procédé destiné à faire fonctionner un système de balayage qui comporte une tête de balayage (1) et un élément émetteur-récepteur (2), dans lequel la tête de balayage (1) comprend une tige de balayage (1.2) et un élément détecteur (1.5) et une transmission de données sans fil peut être établie entre la tête de balayage (1) et l'élément émetteur-récepteur (2), transmission lors de laquelle une information de préparation (B) qui comprend les deux séquences binaires (Y, Z) est transmise de la tête de balayage (1) à l'élément émetteur-récepteur (2), comprenant les étapes consistant à :

- émettre la première séquence binaire (Y), constituée de bits de poids fort et de bits de poids faible,
- émettre la seconde séquence binaire (Z), constituée d'un bit de poids fort et de bits de poids faible après un intervalle de temps défini (T), dans lequel la seconde séquence binaire (Z) comporte moins de bits de poids fort que la première séquence binaire (Y).

10. Procédé selon la revendication 9, dans lequel, après l'émission de la première séquence binaire (Y), une pluralité de secondes séquences binaires (Z) sont émises les unes après les autres après des intervalles de temps définis (T).

11. Procédé selon la revendication 9 ou 10, dans lequel, après l'émission de la seconde séquence binaire (Z) ou des secondes séquences binaires (Z), une première séquence binaire (Y) est réémise.

12. Procédé selon l'une quelconque des revendications 9 à 11, dans lequel la première séquence binaire (Y) comporte un entête ($II_Y$) destiné à la synchronisation des deux séquences binaires (Y, Z), dans lequel l'entête ($II_Y$) comporte plus de bits de poids fort que la seconde séquence binaire (Z).

13. Procédé selon l'une quelconque des revendications 9 à 12, dans lequel la seconde séquence binaire (Z) ne comporte pas plus de deux bits de poids fort.

14. Procédé selon l'une quelconque des revendications 9 à 13, dans lequel, à partir d'un instant ($t_0$) antérieur à la réception de la première séquence binaire (Y), la position temporelle d'une première fenêtre temporelle ($t_{H1}$, $t_{H2}$) est déterminée et un bit de poids fort de la seconde séquence binaire (Z) peut être reçu de manière effective dans cette fenêtre temporelle ($t_{H1}$, $t_{H2}$).

15. Procédé selon l'une quelconque des revendications 9 à 14, dans lequel, à partir d'un instant ($t_0$) antérieur à la réception de la première séquence binaire (Y), la position temporelle d'une seconde fenêtre temporelle ($t_{L1}$, $t_{L2}$) est déterminée et un bit de poids faible de la seconde séquence binaire (Z) peut être reçu de manière effective dans cette fenêtre temporelle ($t_{L1}$, $t_{L2}$).

16. Procédé selon les revendications 14 et 15, dans lequel une pluralité de bits de poids fort et une pluralité de bits de poids faible de la seconde séquence binaire (Z) peuvent être reçus de manière effective, dans lequel l'intervalle de temps ($\Delta$) entre les milieux de la première fenêtre temporelle ($t_{H1}$, $t_{H2}$) et de la seconde fenêtre temporelle ($t_{L1}$, $t_{L2}$) est de même taille.

## FIG. 1

## FIG. 2

FIG. 3a

FIG. 3b

FIG. 3c

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006054978 A1